# EUROPEAN PATENT SPECIFICATION

(11) **EP 0 830 540 B1**
(45) Date of publication and mention of the grant of the patent: **27.06.2001**
(21) Application number: 96919832.4
(22) Date of filing: 30.05.1996
(51) Int. Cl.: F16L 47/06

(54) **CRIMP JOINT CONNECTING PIPES**
QUETSCHVERBINDUNG FÜR ROHRE
ASSEMBLAGE DE TUBES PAR SERTISSAGE

(30) Priority: 09.06.1995 FI 952845
(43) Date of publication of application: 25.03.1998
(73) Proprietor: Uponor Suomi Oy, 65230 Vaasa (FI)
(72) Inventor: STORGÄRD, Christer, FIN-65230 Vaasa (FI)
(74) Representative: Laako, Tero Jussi
(86) International application number: FI9600311
(87) International publication number: WO9641985

(56) References cited:
- WO-A-93/05332
- SE-B- 402 813

## Description

The present invention relates to a method for making joints between pipes, wherein: the first pipe part to be connected is made of plastic material, and it has an original inner diameter which is smaller than the outer diameter of the second pipe part to be connected; the end section of the first pipe part is enlarged in such a way that its expanded inner diameter is larger than the outer diameter of the second pipe section; the first and second pipe parts are placed one within the other; and, because of the influence of the memory of the plastic material, the expanded section is allowed to deform back towards its original dimensions when it presses against the second pipe part, thus forming a shrinkage joint between the pipe parts. The present invention also relates to a special type of pipe part used in this method.

The publication WO-93/20381 describes generally a pipe element manufactured of plastic by injection moulding. This element contains a female part of a sleeve joint in its other end and a male part in the other end. This is especially suitable for a glide pipe. For this purpose, the sleeve joint of the publication has two pairs of support surfaces, which receive the high pressing forces occurring during the glide. In order to make it possible to use the pipe joint for gliding, it must contain at least one pair of support surfaces, i.e. precise countersurfaces which rest on each other in adjoining sections and which extend transversely to the length of the pipe. When the diameter of such an injection-moulded pipe increases, the mould costs and other machine costs rise heavily, and the price of the pipe element becomes high. Because machines suitable for injection moulding of large plastic pipe elements can only be found in relatively few localities and only in relatively large factories, transportation costs rise very high because of long transport distances and because the pipes take up so much space.

Extrusion-moulded plastic pipes generally made of polyvinyl chloride (PVC) again are available also in large diameters, at a reasonable price and at low transport costs in several locations. This is principally because devices required by this manufacturing technology are cheap and thus more widely used than injection moulding machines. However, it is problematic to make expansion joints, such as pipe joints, to these pipes. If, for example, a female sleeve part is made to a PVC pipe by heating the pipe to the softening temperature of the plastic and by forming this female part in this temperature from the pipe material itself, while the material remains in the formed shape upon cooling, one ends up with a conventional pipe joint used in sewers; this joint contains no pair of support surfaces but merely rounded shapes which, for example, upon attempted gliding become interfitting, breaking thus the pipe elements. If again it is attempted to provide an extrusion-moulded pipe with joint parts or equivalent parts by turning, one ends up with two impracticable alternatives. If the wall thickness of the pipe is chosen to be suitable in practice, it is so thin that it is not possible to machine joint parts that can withstand e.g. gliding forces. If again the pipe wall is chosen to be so thick that strong enough joint parts can be turned, the costs rise too high because of the excess material in other parts of the pipe. In addition, turning of an extrusion-moulded pipe results in parts with poor measuring accuracy, which is due to the inner stresses breaking within the pipe.

The publication SE-402 813 discloses an ordinary muff coupling for which the end of the first pipe has manufactured to include a female muff section with a larger inner diameter than the outer diameter of the rest of the first pipe and the second pipe, which is to be inserted into the muff section and acts as a male part of the coupling. In this muff coupling the diameters mentioned above are maintained unchanged all through the installation procedure, from the factory to the finished coupling, and during the use of the connected pipes. A sealing ring of rubber, or of such an other rubber elastic material, which after a deformation immediately springs back to its original form, is beforehand positioned in a groove, which extends around the inner side of the female part of the muff coupling, for sealing the coupling between the female part and male part. According to the publication in this kind of a coupling the sealing ring is often pushed out of its groove by the front edge of the second pipe during its insertion, whereupon no sealing is provided. To solve this problem and to make installation work easier, the publication suggests using of an additional hollow cylinder with an inner diameter slightly larger than the outer diameter of second pipe, and with an outer diameter slightly smaller than the inner diameter of the female muff section. This hollow cylinder has a flange extending inwards from the wall thereof, and this hollow cylinder is beforehand inserted in the female muff section so that the sealing ring of rubber stays compressed in its groove. When the second pipe is pushed in the muff section, the end surface of this second pipe meets the flange of the hollow cylinder and moves said cylinder or a broken section thereof deeper inside the female muff, until the trailing end of the hollow cylinder passes the sealing ring, whereafter the sealing ring of rubber expands at once towards its original form and size and against the outer surface of the male section of the second pipe.

The publication WO-93/05332 describes a method for joining end parts of the same size to each other so that the inner diameter of one end of the plastic pipe, the original size of which, naturally, is smaller than the outer diameter of the plastic pipe, is expanded to be larger than the outer diameter of the plastic pipe, whereafter the end part of the second plastic pipe in the original state is pushed into the expanded end section. After this, the memory of the plastic material is allowed to reset the expanded end section of the pipe part towards its original dimensions, and it presses against the outer surface of the second pipe, thus forming a shrinkage joint between the pipe parts. This produces a very simple final structure and a relatively strong joint between the pipes. However, this solution has some considerable drawbacks. First, it limits the choice of pipe materials, because the said plastic material memory only occurs in some pipe materials. Thus, it is e.g. not possible to use this method to manufacture shrink joints of PVC pipes, because PVC does not have the said memory, i.e. transformation resetting. Second drawback is that it is necessary to use a special machine for expansion of the plastic pipe end on the installation site, which requires availability of energy and the use of a relatively expensive machine on all installation sites. Third, the installation slows down on the installation site, because every pipe end has to be expanded. Fourth drawback is formed by the problems caused by variations in the outdoor temperature. If the outdoor temperature falls below 0°C, as often is the case in Finland, the method of the reference publication cannot be used as such, but the pipe end to be expanded has to be heated very evenly in order to make the even expansion possible and to prevent breaking of the pipe end section upon expanding. In addition, the ingoing pipe section of the joint of the reference publication is bevelled and the design is equivalent to that of the above described sleeve joint, thus having the same drawbacks. If the joint of the reference publication were used for connecting relining pipes, the large longitudinal force caused by relining procedure would very probably make the inner pipe to protrude deeper into the pipe containing the female sleeve, thus causing the pipes to break.

It is thus an object of the present invention to provide a method and equipment for connecting pipes of any material to each other. Another object of the invention relates to a method and equipment with the help of which the pipe joint thus made is able to withstand e.g. a large longitudinal force generated during relining without damaging any part of the joint or without the joint beginning to leak. The third object of the invention relates to a method and equipment with which it would be very fast and simple to make the pipe joint on the installation site and with which it would not be necessary to carry out work requiring high precision or to use any complicated or expensive machines on the site. The fourth object relates to such a method and equipment which result in low manufacturing costs and transport costs to the installation site. The fifth object relates to such a method and equipment with which the pipes and the joint parts contain as little material as possible, or advantageously no material at all which is not necessary for strength, and with which the waste of material in the manufacture of joint parts is as small as possible, or advantageosly, does not occur at all. Further, it is an object of the invention to provide such a connection method and equipment that enable a joint thus made to be used for relining as well as for other pipe joints.

The drawbacks described above can be removed and the objectives defined above can be reached by the method of the present invention, the characteristics of which have been defined in claim 1, and by a pipe part according to the invention, which has been defined in claim 8.

The most important advantage of the invention is that the method and the pipe part of the invention can be used to join together pipes of any material simply by using the pipe part of the invention, without it being necessary to carry out any expansion of component diameters or any controlled heating on the installation site. Thus, work on the installation site can be done very quickly. Second advantage is that with the method and pipe part of the invention the pipe end sections joined together are in a most advantageous case brought directly against each other in a butting contact, and the joint can then withstand even a large push force, for example, during relining. Third advantage is that the joint of the present invention is suitable for use in several various applications. Fourth advantage is that the pipe ends are joined together tightly and that, in many cases, the joint remains reliably tight also without any special seals.

In the following, the invention is described in more detail referring to the attached drawings:
Fig. 1 is a longitudinal section of an advantageous embodiment of a pipe part of the present invention along the line I-I of fig. 2;
Fig. 2 is a cross-sectional view on the pipe part of fig. 1 along the line II-II; and
Fig. 3 shows the pipe part of figures 1 and 2 after a second pipe to be connected to the pipe part of the invention is allowed to join it and visualized as in figure 1.

The first pipe part of the invention is made of plastic material with a memory effect, i.e. after transformation, it resets or deforms back towards its original dimensions. Such plastics are some crystalline thermoplastics, and especially olefin-homomers or copolymers, and combinations of these, and polyamides. Preferable of these are e.g. polypropylene (PP) and high-density polyethylene (HDPE), because of their sufficient strength and low price. Naturally, also some other olefinpolymers or various combinations can be used. Amorphous, i.e. non-crystalline plastics and, for example, PVC do not have the memory properties required by the invention. Expansion or enlarging according to the invention and the following resetting are to be carried out in a temperature area within which the plastic is at least partially in a crystalline form, but which is above the vitrification point. Thus, the temperature of the plastic material has to be below both the softening temperature and the crystallization limit (which sometimes is called crystalline melting point below which the plastic may be crystalline), because above the latter temperature, the material is amorphous and does not have a memory, even though its softening point has not been reached. These critical temperature limits, within which the plastic material is in the desired crystalline form, vary considerably depending on the material; temperatures may become uniform or be different, so no exact limits can be set. For the sake of speed and costs of the present invention it is, however, expedient to avoid extreme temperatures, so that, in practice, it is advantageous to keep the temperature of the plastic material between about 0°C and 100°C. Generally, the crystalline melting point is 100°C - 150°C, below which the temperature of the plastic material to be moulded must remain. The softening temperature is higher. Expansion and resetting may often be carried out in a normal room temperature, such as about 10°C - 40°C, when the resetting usually occurs within a few minutes, or at least a few hours from the beginning of the resetting phase. The given temperature limits concern conventional polypropylene and high-density polyethylene. The resetting may be accelerated by heating the expanded section during resetting, maintaining, however, at the same time the above-mentioned temperature limits. In this connection, heating does not have to be even. High temperatures should be avoided, because they shorten the durability of the parts. There is no critical transformation speed for the expansion, but a few seconds or some tens of seconds are practicable, depending on the material temperature. Thus it is essential that the first pipe part 1 according to the invention is manufactured of one of the above-mentioned plastic types with dimensional resetting abilities.

Advantageously, the billet for the first pipe part 1 may be made by cutting a piece of desired length from an injection-moulded or extrusion-moulded plastic pipe manufactured of a plastic material described above. The billet of which the first pipe part 1 of the invention is manufactured, has an original inner diameter D1, which is smaller than the outer diameter D2 of the pipes to be joined, i.e. of the second pipe parts 2. In order to produce the first pipe part 1, both end sections 11 of the billet are expanded for the length S1 to such an inner diameter D3 which is larger than the outer diameter D2 of the second pipe parts 2. Thereafter, support pieces 3a and 3b, their effective outer diameter D4 corresponding to the said enlarged inner diameter D3 of the first pipe part, are pushed into the expanded end sections 11 of the first pipe part 1. These support pieces 3a, 3b are thus meant to fit relatively tightly within the large inner diameter D3, thus preventing the resetting or deforming back of the end sections 11 of the first pipe part towards the original dimensions. Naturally, the expanded sections 11 of the first pipe part tend to shrink towards the original dimensions, but their inner surfaces 6 meet the outer surfaces 5 of the support pieces 3a, 3b fitted inside, and press against them, but the support pieces prevent them from shrinking further. The expanded sections 11 of the first pipe part thus remain in an unstable or quasi-stable state, due to the influence of the support pieces; however, they tend to reset to their original dimensions D1 because of their memory, but are unable to do so, because of the support pieces.

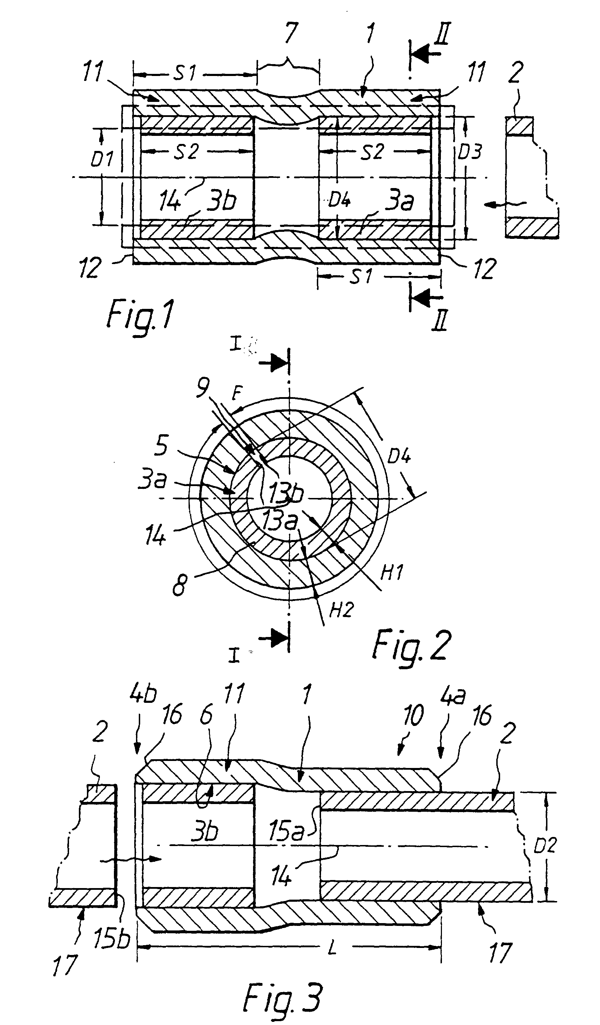

In the figures, there is shown a pipe part 1 according to the invention, which has been expanded from both ends 4A and 4B for the length S1 of the end sections 11. Both end sections 11 include the said support pieces 3a and 3b to prevent the resetting of the diameter dimensions of the first pipe part. The dashed line in figure 1 shows a billet with the original inner diameter D1. The first pipe part 1 (drawn with unbroken line) is formed from the said billet by said expansion and by using the support pieces 3a, 3b. In the other margin of the figure there is shown a small part of the pipe end, i.e. the second pipe part 2 which, at a later stage, will be fastened with the help of the first pipe part 1.

In the embodiment of figures 1 and 3, the total length L of the first pipe part is slightly larger than two times the length S1 of the shrink joint 10 to be made, thus corresponding to the length S1 of the expanded end section 11. So, in this case, there is a short distance 7 between the expanded end sections. In the most advantageous embodiment, the said distance 7 is very short or it does not occur at all, the length L of the first pipe part 1 being 2*S1. In this case, the support pieces 3a and 3b are in contact with each other or at least very close to each other generally in the middle of the length L of the first pipe part. When necessary, the length L of the first pipe part may be 3*S1 or even 5*S1, but when second pipes of the same size are joined together, this larger length is of no use. In the case that the first pipe part 1 of the invention is used for joining second pipes 2 of different diameters, it may be expedient to use such a longer first pipe part 1. For this kind of use it may be necessary to make the original diameters D1 in the end sections 4a and 4b of the first pipe part unequal in size and/or to expand different end sections in the end parts to different-sized expanded inner diameters D3 so that the first pipe part can efficiently adhere to different-sized second pipes 2 in the way described below.

In accordance with the present invention, the first pipe part has to be expanded to inner diameter D3, which is at least 2% - 4%, typically 3% - 16% larger than the original inner diameter D1 for providing a sufficient aperture diameter D3 for the second pipe part 2 and for providing sufficient pressing against the outer surface 5 of the second pipe part in the final joint. In fact, the expansion has to be made originally in the first inner diameter, not shown in the drawings, whereafter a small clearance required by the installation of the support piece, and with time, a small resilience allowed by the support piece 3a, 3b, due to the force generated by the tendency of the expanded part 11 of the first pipe part to deform back, results in the second inner diameter (not shown in the drawings) in the first pipe part when the support pieces are in place. The second inner diameter is slightly smaller than the first inner diameter, the difference being 0.5% - 2%, according to present views. The difference is naturally dependent substantially on the dimensions and material of the support piece, but the value mentioned is suitable for an annular plastic support piece in a first pipe part with a relatively large diameter.

A pipe part according to the invention may include one or several support pieces 3a, 3b in each expanded end section 11 in a way not shown in the drawings, e.g. in order to facilitate the removal of the support pieces described later. Thus, the length S1 of each end section 11 may have several support pieces, or interfitting concentric support pieces may be used.

Support piece 3a and 3b of the present invention may be a fixed ring or a plate section (which is not shown in the drawings), the thickness of which is equivalent to the length S1 of the expanded end section 11 and the outer diameter D4 of which is as close as possible to the expanded inner diameter D3 so that the support piece can be pushed in place shortly after the expansion. However, removal of such a support piece for installation may be difficult. Thus it is most advantageous to make the support piece 3a, 3b of a material strip 8, the width S2 of which is as large as the desired depth S1 of the expanded end section 11 and the length F of which is approximately as large as the circumferential length formed by the inner diameter D3 of the expanded end section. A material strip of this length is bended to a ring so that the ends 13a and 13b transversal to the length F are situated end to end in an abutting manner, thus forming a ring equipped with a break point 9 with an effective diameter D4. This annular support piece is pushed into the expanded end section 11. In order to facilitate fitting, the strip length F can be proportioned to the circumferential dimensions of the diameter D3 so that, at this stage, a very small gap remains between the ends 13a, 13b. This gap closes while the expanded end section 11 of the first pipe part tends to reset towards its original dimensions. The factual support pieces 3a, 3b of the first pipe part 1 do not have a noteworthy gap but merely a break or point of uncontinuity 9, which in figure 2 has been drawn for descriptive purposes only. After this, the effective diameter D4 of the support piece 3a, 3b, which has become annular and which is formed by the strip 8, keeps the inner diameter D3 of the end section 11 in the desired large value which is larger than the outer diameter D2 of the second pipe parts. It depends on the thickness, rigidity and other dimensions of the strip 8, how much the largest expanded diameter D3a of the first pipe part 1 decreases resulting in the unstable expanded second inner diameter maintained by the support piece. This kind of support piece 3a, 3b equipped with a break line 9 is especially easy to remove during further measures described later. In order to facilitate the removal of the support piece it is also of advantage if its outer surface 5 is as smooth as possible.

As it is, the support piece can be made practically of any suitable material, such as plastic, metal, wood, or a combination of these. The removal of the support piece 3a, 3b may also be made easier by making their width S2 slightly larger than the depth S1 of the expanded end section 11, when the support piece projects outside the outer surface 12 of the first pipe part, thus making it easily graspable for removal. A thickness which is about half of the wall thickness H2 of the first pipe part is usually sufficient for the thickness H1 when parallel with the radius of the support piece made from the material strip 8, if the material strip is made of plastic. If the thickness H1 of the strip is less than a third or a quarter of the wall thickness H2, the support piece may yield too much and/or become dented. The strip thickness H1 may be of equal size or larger than the wall thickness H2, but this will raise the costs. Naturally, the dimensions are also dependable on the hardness and, of course, the price of the material.

The first pipe part according to the invention is used for making joints 10 between pipes in the following way. First pipe parts 1 and long second parts of pipes 2 are brought to the installation site; the ends of the second pipe parts or pipes have been cut in a simple manner and advantageously straight. Their outer diameter is D2, which is larger than the original inner diameter D1 of the first pipe parts, but smaller than their expanded inner diameter D3. On the installation site, e.g. a second support piece 3a is removed from the first pipe part 1 of the invention, for example by using a screwdriver which bends the other side 13a or 13b of the circumferential length F of the support piece towards the middle line 14 in the area of the break 9, i.e. towards the middle of the first pipe part, which makes the said edge to snap totally away from the second edge in direction of the middle line 14, whereafter the support piece 3a or 3b is disengaged and it can then be easily pulled out from the expanded end section 11. Next the end of the second pipe part 2 is pushed deeply into the first pipe part from the end 4a, from which the support piece was removed. After this the dimensions of the end section 11 of the said end 4a of the first pipe part are allowed to reset towards the original dimensions by the memory of the plastic material, thus forming a shrinkage joint 10 between the first pipe part 1 and the second pipe part 2 described on the right side of figure 3. Then the second support piece 3b is removed, and the corresponding end of the opposite second pipe part 2 is pushed into the other end 4b of the first pipe part as deep as possible, whereafter this end section is allowed to reset towards its original dimensions by the memory of the plastic material, thus forming a shrinkage joint between the said second pipe part 2 and the first pipe part 1. This pipe 2 to be joined is schematically described on the left side of figure 3. This way, two pieces of second pipe parts 2 have been joined to each other with a first pipe part 1.

Especially when the said first pipe part is short and its total length L is nearly the same as the sum of the two expanded end sections 11 and thus also of the sum of the lengths S1 of the shrink joint 10, the end parts 15a and 15b set against each other e.g. during relining so that no forces are exerted to the first pipe part, which thus guarantees the durability and tightness of the joint. In order to produce this good durability against the longitudinal force during gliding, it is expedient to arrange the end parts 15a, 15b of the second pipe parts or pipes 2 perpendicular to the middle line 14 and straight, as is shown in figure 3. Likewise, in order to reduce the longitudinal forces during relining, it is advantageous to make the end surfaces 16 of the first pipe part 1 oblique, i.e. conical so that the vertices of the cone point to opposite directions, as is shown in figure 3. In other applications, the end parts of the first pipe part 1 may possibly be of some other shape, such as straight, as in figure 1.

In practice, when the support piece 3a, 3b is removed from the expanded end section 11, the end section usually resets immediately slightly to the third inner diameter (not shown in the figures) and continues then the resetting movement. The expansion of the end sections 11 and their supporting with the support pieces mus be such that the last mentioned inner diameter D3c is larger than the outer diameter D2 of the second pipes or pipe parts 2. Because differences in the first, the second and the third diameters are small, it is normally possible to handle only the inner diameter D3, as is the case in the description in general. Normally, the outer diameter D2 of the second pipe part is 1% - 12% and possibly 2% - 8% larger than the original inner diameter D1. As one example of the first pipe part the original inner diameter D1 is 310 mm; this is expanded to the value 330 mm of the diameter D3a, the inner diameter of which immediately after the removal of the support piece is 323 mm and which presses on the second pipe 2, the outer diameter D2 of which is 317 mm. It is evident that the method and the first pipe part of the present invention are applicable to pipes of any size.

Other pipes or pipe parts of the joint or other possible components may be manufactured of any suitable material, such as similar type materials as the first pipe part, or of PVC or plastic reinforced with fibreglass (e.g. polyester-fibreglass-composite), or ceramics or metal, etc. It is advantageous that the outer surface 17 of the second pipe part is coarse and/or possibly grooved at least in the area protruding into the end sections 11 in order to improve the adhesion between the inner part 6 of the first pipe part and the outer surface 17 of the second pipe part.

Normally, a shrinkage joint 10 manufactured according to the invention does not require seals. When desired, seals may, however, be used e.g. in the following way. A relatively flat sealing tape or elastic piece of hose is placed on the second pipe part before pushing the pipe part into the end section 11 of the first pipe part, and the seal presses between the inner surface 6 of the first pipe part 1 with reset dimensions and the outer surface 17 of the second pipe part. A circumferential groove may also be formed near the end 15a, 15b of the second pipe part on its outer surface, and an O-ring or other seal may be placed in the groove, the said seal being pressed between the inner surface 6 of the reset first pipe part 1 and the outer surface 17 of the second pipe part. For example, an X-seal may be placed between the opposite ends 15a and 15b of the second pipe parts 2, the arms of which pointing outwards are pressed between the inner surface 6 of the first pipe part with reset dimensions and the outer surface 17 of the second pipe part, as is described above. Such a seal prevents the medium flowing in the pipe from coming into contact with the first pipe part, which may be desirable when certain chemicals are flowing in the pipe.

## Claims

1. A method for making load bearing joints (10) between pipes, in which: a first pipe part (1) to be connected is of plastic material at least partly in crystalline form and has an original diameter (D1) which is smaller than the outer diameter (D2) of a second pipe part (2) to be connected; an end section (11) of the first pipe part is enlarged so that its expanded inner diameter (D3) is larger than the outer diameter (D2) of the second pipe part; the first and second pipe parts are placed one within the other; and the memory of the plastic material is allowed to deform back the expanded first pipe part towards the original dimensions whereupon it presses against the second pipe part, thus forming a shrinkage joint (10) between the pipe parts (1, 2), **characterized** in that the method comprises the steps:
- both end sections (11) of said first pipe part (1) are enlarged;
- support pieces (3a, 3b) maintaining the expanded inner diameters (D3) are arranged within the end sections; and that after the first pipe part and the second pipe parts (2) have been brought to the installation site,
- one of said support pieces (3a or 3b) is removed from an end section (11);
- an end of one of said second pipe parts (2) is inserted into the first pipe part from that end (4a or 4b) thereof, from which the support piece was removed; and
- the expanded section (11) of the first pipe part (1) is allowed to reset by the memory of the plastic material in order to provide a first shrinkage joint (10) between the first and the second pipe part.

2. A method according to claim 1, **characterized** in that the method further comprises the steps:
- another of said support pieces (3b or 3a) is removed from an end section (11);
- an end of another of said second pipe parts (2) is inserted into the first pipe part from that end (4b or 4a) thereof, from which the support piece was removed; and
- the expanded section (11) of the first pipe part (1) is allowed to reset by the memory of the plastic material as described in order to provide a second shrinkage joint (10) between a first and a second pipe part, whereupon two of said second pipe parts or pipes are connected to each other with a first pipe part.

3. A method according to claim 1 or 2, **characterized** in that first pipe parts (1) are manufactured to have a length (L) which is at maximum five or three times the length (S1) of a shrinkage joint of said type, or which is substantially equivalent to the length of two shrinkage joints of said type; and that the expanded inner diameter (D3) of the first pipe part is maintained at least for the lengths (S1) of each shrinkage joint (10) under a quasi-stable state.

4. A method according to claim 1 or 2, **characterized** in that said enlarging of the end sections (11) of said first pipe part, and said resetting or a resetting accelerated by heating, of these expanded sections (11) are carried out in a temperature, while maintaining the temperature below a softening temperature and a crystallization limit of the plastic material of said first pipe part.

5. A method according to claim 1 or 3, **characterized** in that the support piece (3a, 3b) is made of plastic, wood or metal, and has a form of:
- a fixed ring or a plate section, the outer diameter of which corresponds to the expanded inner diameter (D3), or
- a material strip (8), the length (F) of which corresponds to the circumferential length of the expanded inner diameter (D3) and which is bent within the expanded end section (11) to form a ring provided with a break (9).

6. A method according to claim 2 or 3, **characterized** in that end parts (15a and 15b) of the second pipe parts (2) connected with the first pipe part (1) set against each other.

7. A method according to any of the preceding claims, **characterized** in that the first pipe part (1) is made of a plastic material, which is an olefin-homomer or copolymer, or a combination of these, or a high-density polyethylene or polypropylene; and that the first pipe parts (1) have been produced by cutting pieces of the length (L) of each pipe part from injection-moulded or extrusion-moulded plastic pipe.

8. A first pipe part for making load bearing joints (10) between pipes, in which the first pipe part (1) to be joined is of a plastic material at least partly in crystalline form and has an original inner diameter (D1), which is smaller than the outer diameter (D2) of a second pipe part (2) to be joined; an end section (11) of the first pipe part is enlarged so that its inner diameter (D3) is larger than the said outer diameter (D2) of the second pipe part; the first and second pipe parts are arranged one within the other, and the memory of the plastic material is allowed to deform back the expanded end section (11) of the first pipe part towards the original dimensions, whereupon it presses against the second pipe part, thus forming a shrinkage joint (10) between the pipe parts (1, 2), **characterized** in that said first pipe part (1) comprises:
- both end sections (11) of the first pipe part (1) in an expanded quasi-stable state having said large resetting inner diameter (D3); and
- detachable support pieces (3a, 3b) within both of the end sections (11), the effective outer diameter (D4) of said pieces corresponding to the said large resetting inner diameter (D3), whereupon the inner surfaces (6) of the end sections are supported against said detachable support pieces (3a, 3b).

9. A pipe part according to claim 8, **characterized** in that the first pipe part have a length (L) of at maximum five or three times (5×S1 or 3×S1) the length of the shrinkage joints (10) of said type, or of substantially two times (2×S1) the length of the shrinkage joints of said type; and that each of the end sections (11) in the first pipe part (1) includes several support pieces.

10. A pipe part according to claim 8 or 9, **characterized** in that the support piece (3a, 3b) is: a ring or a plate, the outer diameter of which corresponds to the expanded inner diameter (D3); or a material strip (8), the length (F) of which corresponds to the circumferential length of the expanded inner diameter (D3) and which is bent as a ring including a break (9) within the expanded end section; that the outer surface (5) of the support piece situated against the expanded inner surface (6) of the first pipe part is smooth in order to facilitate detachment; and that the support pieces (3a, 3b) are made of plastic, wood or metal.

11. A pipe part according to any of the claims 8 to 10, **characterized** in that the first pipe part is of plastic material, which is an olefine homomer or copolymer, or a combination of these, or high-density polyethylene or polypropylene.

## Patentansprüche

1. Verfahren zur Herstellung von tragenden Verbindungen (10) zwischen Rohren, bei welchem ein erster zu verbindender Rohrteil (1) aus Kunststoff zumindest teilweise in kristalliner Form besteht und einen ursprünglichen Durchmesser (D1) aufweist, der kleiner als der Außendurchmesser (D2) eines zweiten zu verbindenden Rohrteils (2) ist; ein Endabschnitt (11) des ersten Rohrteils derart erweitert wird, dass sein erweiterter Innendurchmesser (D3) größer als der Außendurchmesser (D2) des zweiten Rohrteils ist; der erste und der zweite Rohrteil ineinander angeordnet werden; und das Gedächtnis des Kunststoffs den erweiterten ersten Rohrteil in die ursprünglichen Dimensionen zurückverformen kann, worauf er gegen den zweiten Rohrteil drückt und so eine Schrumpfverbindung (10) zwischen den Rohrteilen (1, 2) bildet, dadurch gekennzeichnet, dass das Verfahren folgende Schritte umfasst:
- beide Endabschnitte (11) des ersten Rohrteils (1) werden erweitert;
- Haltestücke (3a, 3b), die die erweiterten Innendurchmesser (D3) aufrechterhalten, werden in den Endabschnitten angeordnet; und nachdem der erste Rohrteil und die zweiten Rohrteile (2) an die Einbaustelle gebracht worden sind,
- wird eines der Haltestücke (3a oder 3b) aus einem Endabschnitt (11) entfernt;
- wird ein Ende eines der zweiten Rohrteile (2) in den ersten Rohrteil eingeschoben, u.zw. von jenem Ende (4a oder 4b) desselben, von dem das Haltestück entfernt worden ist; und
- wird der erweiterte Abschnitt (11) des ersten Rohrteils (1) durch das Gedächtnis des Kunststoffs wieder in seine Grundstellung zurückgehen gelassen, um eine erste Schrumpfverbindung (10) zwischen dem ersten und dem zweiten Rohrteil zu bilden.

2. Verfahren nach Anspruch 1, dadurch gekennzeichnet, dass das Verfahren weiters folgende Schritte umfasst:
- ein anderes der Haltestücke (3b oder 3a) wird aus einem Endabschnitt (11) entfernt;
- ein Ende eines anderen der zweiten Rohrteile (2) wird in den ersten Rohrteil eingeschoben, u.zw. von jenem Ende (4b oder 4a) desselben, von dem das Haltestück entfernt worden ist; und
- der erweiterte Abschnitt (11) des ersten Rohrteils (1) wird durch das Gedächtnis des Kunststoffs wie beschrieben in seine Grundstellung zurückgehen gelassen, um eine zweite Schrumpfverbindung (10) zwischen einem ersten und einem zweiten Rohrteil zu bilden, worauf zwei der zweiten Rohrteile oder Rohre mittels eines ersten Rohrteils miteinander verbunden sind.

3. Verfahren nach Anspruch 1 oder 2, dadurch gekennzeichnet, dass erste Rohrteile (1) so ausgeführt werden, dass sie eine Länge (L) aufweisen, die höchstens fünf oder drei Mal so groß wie die Länge (S1) einer Schrumpfverbindung dieser Art ist oder die im wesentlichen gleich der Länge zweier Schrumpfverbindungen dieser Art ist; und dass der erweiterte Innendurchmesser (D3) des ersten Rohrteils zumindest über die Länge (S1) jeder Schrumpfverbindung (10) in einem quasi-stabilen Zustand gehalten wird.

4. Verfahren nach Anspruch 1 oder 2, dadurch gekennzeichnet, dass das Erweitern der Endabschnitte (11) des ersten Rohrteils und das Zurückgehen oder ein durch Erhitzen beschleunigtes Zurückgehen dieser erweiterten Abschnitte (11) bei einer Temperatur ausgeführt wird, welche Temperatur unter einer Erweichungstemperatur und einer Kristallisationsgrenze des Kunststoffs des ersten Rohrteils gehalten wird.

5. Verfahren nach Anspruch 1 oder 3, dadurch gekennzeichnet, dass das Haltestück (3a, 3b) aus Kunststoff, Holz oder Metall hergestellt ist und die Form
- eines fixen Ringes oder Plattenabschnitts, dessen Außendurchmesser dem erweiterten Innendurchmesser (D3) entspricht, oder
- eines Materialstreifens (8), dessen Länge (F) der Umfangslänge des erweiterten Innendurchmessers (D3) entspricht und der im erweiterten Endabschnitt (11) gebogen ist, um einen Ring mit einer Unterbrechung (9) zu bilden, aufweist.

6. Verfahren nach Anspruch 2 oder 3, dadurch gekennzeichnet, dass Endteile (15a und 15b) der mit dem ersten Rohrteil (1) verbundenen zweiten Rohrteile (2) aneinander gebracht werden.

7. Verfahren nach einem der vorhergehenden Ansprüche, dadurch gekennzeichnet, dass der erste Rohrteil (1) aus Kunststoff, u.zw. einem Olefin-Homomer oder -Copolymer oder einer Kombination derselben oder einem hochdichten Polyethylen oder Polypropylen, hergestellt wird, und dass die ersten Rohrteile (1) durch Abschneiden von Stücken mit der Länge (L) jedes Rohrteils von einem spritzgussgeformten oder stranggussgeformten Kunststoffrohr gefertigt sind.

8. Erster Rohrteil zur Herstellung von tragenden Verbindungen (10) zwischen Rohren, wobei der erste zu verbindende Rohrteil (1) aus einem Kunststoff zumindest teilweise in kristalliner Form besteht und einen ursprünglichen Innendurchmesser (D1) aufweist, der kleiner als der Außendurchmesser (D2) eines zweiten zu verbindenden Rohrteils (2) ist; ein Endabschnitt (11) des ersten Rohrteils erweitert ist, sodass sein Innendurchmesser (D3) größer als der Außendurchmesser (D2) des zweiten Rohrteils ist; der erste und der zweite Rohrteil ineinander angeordnet sind; und das Gedächtnis des Kunststoffs den erweiterten Endabschnitt (11) des ersten Rohrteils in die ursprünglichen Dimensionen zurückverformen kann, worauf er gegen den zweiten Rohrteil drückt und so eine Schrumpfverbindung (10) zwischen den Rohrteilen (1, 2) bildet, dadurch gekennzeichnet, dass der erste Rohrteil (1) folgendes umfasst:
- beide Endabschnitte (11) des ersten Rohrteils (1) in einem erweiterten quasi-stabilen Zustand mit dem großen zurückgehenden Innendurchmesser (D3); und
- abnehmbare Haltestücke (3a, 3b) in den beiden Endabschnitten (11), wobei der tatsächliche Außendurchmesser (D4) der Stücke dem großen zurückgehenden Innendurchmesser (D3) entspricht und die Innenflächen (6) der Endabschnitte an den abnehmbaren Haltestücken (3a, 3b) abgestützt sind.

9. Rohrteil nach Anspruch 8, dadurch gekennzeichnet, dass der erste Rohrteil eine Länge (L) von höchstens fünf oder drei Mal (5xS1 oder 3xS1) der Länge der Schrumpfverbindungen (10) dieser Art oder von im wesentlichen zwei Mal (2xS1) der Länge der Schrumpfverbindungen dieser Art aufweist; und dass jeder der Endabschnitte (11) im ersten Rohrteil (1) mehrere Haltestücke aufweist.

10. Rohrteil nach Anspruch 8 oder 9, dadurch gekennzeichnet, dass das Haltestück (3a, 3b) ein Ring oder eine Platte ist, dessen bzw. deren Außendurchmesser dem erweiterten Innendurchmesser (D3) entspricht; oder ein Materialstreifen (8), dessen Länge (F) der Umfangslänge des erweiterten Innendurchmessers (D3) entspricht und der in dem erweiterten Endabschnitt zu einem Ring mit einer Unterbrechung (9) gebogen ist; dass die Außenfläche (5) des an der erweiterten Innenfläche (6) des ersten Rohrteils anliegenden Haltestücks zwecks leichteren Entfernens glatt ist; und dass die Haltestücke (3a, 3b) aus Kunststoff, Holz oder Metall sind.

11. Rohrteil nach einem der Ansprüche 8 bis 10, dadurch gekennzeichnet, dass der erste Rohrteil aus Kunststoff, u.zw. einem Olefin-Homomer oder -Copolymer oder einer Kombination derselben oder einem hochdichten Polyethylen oder Polypropylen, hergestellt ist.

## Revendications

1. Un procédé pour réaliser des joints porteurs de charge (10) entre des tubes, selon lequel : une première portion de tube (1) à connecter est en matière plastique au moins partiellement sous forme cristalline et a un diamètre d'origine (D1) qui est plus petit que le diamètre externe (D2) d'une seconde portion de tube (2) à connecter ; un bout d'extrémité (11) de la première portion de tube est élargi de telle manière que son diamètre interne agrandi (D3) est plus grand que le diamètre externe (D2) de la seconde portion dè tube ; les première et seconde portions de tube sont placées l'une dans l'autre ; et la mémoire de la matière plastique sert à déformer rétroactivement la première portion de tube élargie vers les dimensions d'origine, après quoi elle est resserrée sur la seconde portion de tube, en formant un joint par retrait (10) entre les portions de tube (1,2),
lequel procédé est caractérisé en ce qu'il comprend les étapes suivantes :
- élargir les deux bouts d'extrémité (11) de ladite portion de tube (1) ;
- arranger des pièces de support (3a, 3b) dans les bouts d'extrémité pour maintenir les diamètres internes agrandis (D3) ; et cela après que la première portion de tube et les secondes portions de tube (2) ont été amenées sur le site d'installation ;
- enlever l'une desdites pièces de support (3a, 3b) d'un bout d'extrémité (11) ;
- insérer une extrémité de l'une desdites secondes portions de tube (2) dans la première portion de tube
(1) à partir de celle de ses extrémités (4a, 4b) de laquelle la pièce de support a été enlevée ; et
- permettre au bout élargi (11) de la première portion de tube (1) de se resserrer de par la mémoire de la matière plastique afin d'obtenir un premier joint par retrait (10) entre la première portion de tube et la seconde portion de tube.

2. Un procédé selon la revendication 1, caractérisé en ce qu'il comprend en outre les étapes suivantes :
- enlever l'autre desdites pièces de support (3b ou 3a) d'un bout d'extrémité (11) ;
- insérer une extrémité d'une autre desdites secondes portions de tube (2) dans la première portion de tube à partir de celle de ses extrémités (4b ou 4a) de laquelle la pièce de support a été enlevée ; et
- permettre au bout élargi (11) de la première portion de tube (1) de se resserrer de par la mémoire de la matière plastique comme décrit afin d'obtenir un second joint par retrait (10) entre la première portion de tube et une seconde portion de tube, après quoi deux desdites secondes portions de tube ou tubes sont connectés ensemble avec une première portion de tube.

3. Un procédé selon la revendication 1 ou 2, caractérisé en ce que les premières portions de tube (1) sont fabriquées de manière à avoir une longueur (L) qui soit au maximum cinq ou trois fois la longueur (S1) d'un joint par retrait dudit type, ou qui soit sensiblement égale à la longueur de deux joints de retrait dudit type ; et en ce que le diamètre interne agrandi (D3) de la première portion de tube est maintenu au moins sur la longueur (S1) de chaque joint par retrait (10) dans un état quasi stable.

4. Un procédé selon la revendication 1 ou 2, caractérisé en ce que ledit élargissement des bouts d'extrémité (11) de ladite première portion de tube, et ledit resserrement ou un resserrement accéléré par chauffage de ces bouts élargis (11) sont mis en oeuvre à une certaine température, qui est maintenue au-dessous de la température de ramollissement et de la limite de cristallisation de la matière plastique de ladite première portion de tube.

5. Un procédé selon la revendication 1 ou 3, caractérisé en ce que la pièce de support (3a, 3b) est en matière plastique, bois ou métal et a l'une des formes suivantes :
- celle d'une bague fermée ou d'une pièce plate, dont le diamètre externe correspond au diamètre interne agrandi (D3), ou
- celle d'une bande de matière (8) dont la longueur (F) correspond à la longueur de circonférence du diamètre interne agrandi (D3) et qui est cintrée dans le bout d'extrémité élargi (11) pour former une bague ouverte par une fente (9).

6. Un procédé selon la revendication 2 ou 3, caractérisé en ce que les bouts d'extrémité (15a et 15b) des secondes portions de tube (2) connectées avec la première portion de tube (1) portent l'un contre l'autre.

7. Un procédé selon l'une quelconque des revendications précédentes, caractérisé en ce que la première portion de tube (1) est en une matière plastique qui est un homopolymère ou un copolymère d'oléfine, ou une combinaison de ceux-ci, ou un polyéthylène ou polypropylène de haute densité ; et en ce que les premières portions de tube (1) ont été produites en découpant des tronçons à la longueur (L) de chaque portion de tube dans des tubes de matière plastique moulée par injection ou par extrusion.

8. Une première portion de tube destinée à la réalisation d'un joint porteur de charge (10) entre des tubes, laquelle première portion de tube (1) à joindre est en une matière plastique au moins partiellement sous forme cristalline et a un diamètre d'origine (D1) qui est plus petit que le diamètre externe (D2) d'une seconde portion de tube (2) à joindre ; un bout d'extrémité (11) de la première portion de tube étant élargi de telle sorte que son diamètre interne (D3) soit plus grand que ledit diamètre externe (D2) de la seconde portion de tube ; les première et seconde portions de tube étant arrangées l'une dans l'autre, et la mémoire de la matière plastique servant à déformer rétroactivement le bout d'extrémité élargi (11) de la première portion de tube vers les dimensions d'origine, après quoi il est resserré sur la seconde portion de tube, formant ainsi un joint par retrait (10) entre les portions de tube (1, 2), caractérisée en ce qu'en outre :
- les deux bouts d'extrémité (11) de la première portion de tube (1) sont dans un état élargi quasi stable ayant ledit diamètre interne de resserrement agrandi (D3) ; et
- des pièces de support amovibles (3a, 3b) sont engagées dans les deux bouts d'extrémité (11), le diamètre externe effectif (D4) desdites pièces correspondant audit diamètre interne de resserrement agrandi (D3), les surfaces internes (6) des bouts d'extrémité étant ainsi supportées contre lesdites pièces de support amovibles (3a, 3b).

9. Une portion de tube selon la revendication 8, caractérisée en ce qu'elle a une longueur (L) d'un maximum de cinq ou trois fois (5xS1 ou 3xS1) la longueur des joints de retrait (10) dudit type, ou de sensiblement deux fois (2xS1) la longueur des joints de retrait dudit type ; et en ce que chacun des bouts d'extrémité (11) de la première portion de tube (1) comprend plusieurs pièces de support.

10. Une portion de tube selon la revendication 8 ou 9, caractérisée en ce que la pièce de support (3a, 3b) est : une bague ou une plaque, dont le diamètre correspond au diamètre interne agrandi (D3) ; ou une bande de matière (8) dont la longueur (F) correspond à la longueur de circonférence du diamètre interne agrandi (D3) et qui est cintrée sous la forme d'une bague ouverte par une fente (9) dans le bout d'extrémité élargi ; en ce que la surface externe (5) de la pièce de support située au contact de la surface interne agrandie (6) de la première portion de tube est lisse afin de faciliter l'enlèvement ; et en ce que les pièces de support (3a, 3b) sont en matière plastique, bois ou métal.

11. Une portion de tube selon l'une quelconque des revendications 8 à 10, caractérisée en ce qu'elle est en matière plastique, s'agissant d'un homopolymère ou copolymère d'oléfine, ou d'une combinaison de ceux-ci, ou d'un polyéthylène ou polypropylène de haute densité.
